Europäisches Patentamt

European Patent Office

Office européen des brevets

(19)

(11) EP 0 561 224 B1

(12) EUROPÄISCHE PATENTSCHRIFT

(45) Veröffentlichungstag und Bekanntmachung des Hinweises auf die Patenterteilung:
14.01.1998  Patentblatt 1998/03

(51) Int Cl.6: **C08G 63/64**, C08G 69/44, C08G 63/16, C08G 18/42

(21) Anmeldenummer: 93103414.4

(22) Anmeldetag: 03.03.1993

(54) **Kompostierbare thermoplastische Blockcopolyester für Verpackungsmaterialien**

Compostable thermoplastic block copolyesters for packing material

Copolyesters en bloc compostables et thermoplastiques pour matériaux d'emballage

(84) Benannte Vertragsstaaten:
BE DE FR GB IT NL

(30) Priorität: 16.03.1992  DE 4208360

(43) Veröffentlichungstag der Anmeldung:
22.09.1993  Patentblatt 1993/38

(73) Patentinhaber: BAYER AG
51368 Leverkusen (DE)

(72) Erfinder:
• Grigat, Ernst, Dr.
W-5090 Leverkusen (DE)
• Dujardin, Ralf, Dr.
W-4156 Willich-Anrath (DE)
• Timmermann, Ralf, Dr.
W-4150 Krefeld (DE)
• Rast, Hans-Georg, Dr.
W-5060 Bergisch Gladbach 2 (DE)

(56) Entgegenhaltungen:
WO-A-91/02015          DE-A- 1 961 996
FR-A- 2 393 823        US-A- 3 287 442
US-A- 3 843 708        US-A- 4 129 715

• JOURNAL OF POLYMER SCIENCE, Bd.55, 1961, NEW YORK US Seiten 343 - 352 S. H. MERRILL
• D. C. ALLPORT, W. H. JANES, EDITORS 'block copolymers' 1973 , APPLIED SCIENCE PUBLISHERS LTD. , LONDON S. 443, D.C. Allport et al.: property-structure relationships in polyurethane block copolymers * Seite 444 - Seite 446 * * Seite 453 * * Seite 472 - Seite 474 *
• PATENT ABSTRACTS OF JAPAN vol. 003, no. 142 (C-065) 24. November 1979 & JP-A-54 119 594 (KOGYO GIJUTSUIN) 17. September 1979

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Gegenstand der vorliegenden Erfindung sind kompostierbare thermoplastisch verarbeitbare Copolymere, aus teilkristallinen weichsegmenten aus aliphatischen Estern mit einem Schmelzbereich zwischen 30° C und 200° C, vorzugsweise 40° C und 120° C, sowie amorphen Hartsegmenten wobei die Weichsegmente einen Anteil von 70 Gew.-% bis 95 Gew.-%, vorzugsweise 75 Gew.-% bis 85 Gew.-%, bezogen auf das Copolymeren, haben, die erfindungsgemäßen Copolymere ein mittleres Molekulargewicht ($\overline{M}$w ermittelt nach Gelchromatographie in m-Kresol gegen Standard Polystyrol) von 15.000 bis 1.000.000, vorzugsweise 25.000 bis 400.000 aufweisen und wobei 1 g erfindungsgemäßes Copolymer in 250 ml ASTM-G22-Nährsalzlösung bei einem pH-Wert von 6,8, angeimpft mit 2 ml einer Suspension von 10g Gartenkompost in 100 ml Nährsalzlösung bei Schwenken mit 220 Upm bei 37° C unter Luftzutritt innerhalb von höchstens zwei Wochen das Wachstum von mindestens 30 mg/l Biomasse hervorruft und vorzugsweise unter den gleichen Bedingungen innerhalb von höchstens vier Wochen eine Gewichtsabnahme von mindestens 15 Gew.-% zeigt.

Die Struktur von thermoplastischen Elastomeren wird in der Fachliteratur mit "gleichzeitigem Vorliegen weichen und elastischer Segmente mit hoher Dehnbarkeit und niedriger Glastemperatur ($T_G$-Wert) sowie harter und kristallisierbarer Segmente mit geringer Dehnbarkeit, hohem $T_G$-Wert und der Neigung zur Assoziatbildung (Vernetzung)" (W. Hofmann, "Thermoplastische Elastomere - Stoffklassen und Versuch einer Klassifikation", Kunststoffe 77 (1987) 767 bis 776) beschrieben.

Rein aliphatische biologisch abbaubare Poly(ester-carbonate) sind bekannt, die Herstellung ist jedoch aufwendig. Ihre Verwendung ist ausschließlich als chirurgisches Nahtmaterial beschrieben, eine Kompostierbarkeit wird nicht angesprochen (B. C. Benicewicz, P. K. Hopper, J. Bioact. Comp. Polym. 6 (1991) 64; US 4429080).

Biologisch abbaubare Poly(ester-amide) aus Milchsäure, Diaminen und Dicarbonsäuredichloriden (US-Pat. 4 343 931; US-Pat. 4 529 792) bzw. aus Caprolacton und Caprolactam (Jap. Pat. 79 119 593, Jap. Pat. 79 119 594) sind ebenfalls bekannt. Sie sind jedoch aufwendig herzustellen.

Die biologische Abbaubarkeit von aliphatischen Polyestern aus Dicarbonsäuren und Dialkoholen ist ebenfalls bekannt (siehe beispielsweise EP 0 452 111). Auch hierbei ist die Herstellung sehr aufwendig. Die technischen Eigenschaften derartig hergestellter Produkte sind wenig vorteilhaft.

Die Herstellung von Poly(ester-amiden) durch Umsetzung von säureterminierten aliphatischen Esterprepolymeren mit aromatischen Diisocyanaten ist bekannt (siehe beispielsweise US 4 129 715, EP 0 275 988). Eine biologische Abbaubarkeit dieser Materialien wird nicht gelehrt.

Die Umsetzung aliphatischer hydroxyterminierter Esterprepolymerer mit Polycarbonaten zu Ester-Carbonat-Vorkondensaten (siehe beispielsweise DE 3 529 984) bzw. zu Poly(ester-carbonaten) mit 5 Gew.-% bis 70 Gew.-% Esteranteil ist bekannt (siehe beispielsweise DE 2 726 417 oder EP 0 127 842). Die daraus resultierenden Materialien entsprechen jedoch nicht dem in dieser Erfindung beschriebenen physikalischen Aufbau, da sie teilkristalline Hartsegmente mit einer Schmelztemperatur zwischen 160° C und 250° C enthalten (die Teilkristallinität wird in DE 2 636 783 detailliert beschrieben). Eine biologische Abbaubarkeit der daraus resultierenden Materialien wird nicht gelehrt. Zudem sind hochschmelzende kristalline Segmente für eine gute biologische Abbaubarkeit sehr hinderlich (S. J. Huang, Biodegradable Polymers in: Encyclopedia of Polymer Science and Engineering, 2nd Ed., Vol. 2, 223, Wiley & Sons, New York 1988).

Völlig überraschend gelang es, hoch aliphatisch-ester-haltige Copolyester zu synthetisieren, die aufgrund der Härte und der Morphologie als thermoplastische Elastomere bezeichnet werden müssen, jedoch der oben angegebenen Definition (W. Hofmann, "Thermoplastische Elastomere - Stoffklassen und Versuch einer Klassifikation", Kunststoffe 77 (1987) 767 bis 776) bezüglich der kristallinen Hartsegmente widersprechen. Dies gelang durch den Einsatz amorpher Hartsegmente wie beispielsweise aromatischer Carbonate, die bekanntermaßen amorph sind (D. Freitag, U. Grigo, P.R. Müller, W. Nouvertne: Polycarbonates in: Encyclopedia of Polymer Scinece and Engineering, 2nd Ed., Vol. 11, 655, Wiley & Sons, New York 1988).

Nicht vorhersehbar und gegenüber den bekannten carbonatreicheren Systemen (DE 2 636 783) neu ist das Verschwinden des Carbonat-Glasübergangs oberhalb 150°C bei gleichzeitigem Erhalt der Phasentrennung.

Ebenfalls überraschend und nicht vorhersehbar tritt gegenüber den bekannten carbonatreicheren Systemen (DE 2 636 783) eine feinkristalline Struktur in Erscheinung, die für die vergleichsweise hohe Stabilität der erfindungsgemäßen Copolymere verantwortlich ist. Im Gegensatz zu den bekannten carbonatreicheren Systemen mit 40 Gew.-% Carbonatsegmenten, deren grobere Dendritenstruktur nach dem Abkühlen einer geschmolzenen Probe nicht mehr ausgebildet wird, bleibt diese stabilisierende feinkristalline Struktur auch beim Abkühlen erhalten. Noch carbonatreichere Systeme (60 Gew.-% Carbonatsegmente) sind amorph. Die kristallinen Bereiche der erfindungsgemäßen Copoly (ester-carbonate) bestehen aus aliphatischen Estersegmenten, während die amorphen Bereiche aus Ester- oder aus Carbonatsegmenten bestehen können. Es gibt keine Vorzugsrichtung, so daß eine konstante Stabilität in alle Richtungen gewährleistet ist.

Die Estersegmente der erfindungsgemäßen Copolymeren können je nach einzusetzendem Hartsegment bzw.

Herstellungsverfahren bestehen aus mindestens einem der folgenden Verbindungstypen:

1. Oligoester mit mehreren, bevorzugt zwei, COOH-Endgruppen mit Mn (Zahlenmittel) von 600 bis 2.000, bevorzugt 800 bis 1.300, die beispielsweise durch literaturbekannte Umsetzungen wie beispielsweise die Schmelzkondensation in Anwesenheit von Katalysatoren oder vorzugsweise katalysatorfrei aus mehrwertigen, vorzugsweise zweiwertigen und gegebenenfalls zusätzlich dreiwertigen Alkoholen mit mehrwertigen, vorzugsweise zweiwertigen und gegebenenfalls zusätzlich dreiwertigen Carbonsäuren hergestellt wurden. Anstelle der freien Carbonsäuren können auch die entsprechenden Carbonsäurechloride, Carbonsäureanhydride oder Carbonsäureester niederer Alkohole zur Herstellung dieser Oligoester verwendet werden.

Die mehrwertigen Alkohole können aliphatischer oder cycloaliphatischer, bevorzugt linearer aliphatischer Natur sein. Als Beispiele hierfür seien genannt: Ethylenglykol, Propylenglykol-1,3, Butandiol-1,4, Pentandiol-1,5 und Hexandiol-1,6.

Die mehrwertigen Dicarbonsäuren können aliphatischer oder cycloaliphatischer, bevorzugt linearer aliphatischer Natur sein. Als Beispiele hierfür seien genannt: Bernsteinsäure, Korksäure, Azelainsäure, Sebacinsäure und bevorzugt Adipinsäure.

Durch die Wahl des definierten Säureüberschusses wird der Gehalt an Carboxyl-Endgruppen und damit das "mittlere Molgewicht" vorgegeben. Dieses ist durch Bestimmung der "Säurezahl" ermittelbar.

2. Oligoester mit mehreren, bevorzugt zwei, Hydroxylendgruppen mit Mn (Zahlenmittel) von 1.000 bis 4.000, bevorzugt 1.800 bis 2.800, die beispielsweise durch literaturbekannte Umsetzungen wie beispielsweise die Schmelzkondensation in Anwesenheit von Katalysatoren wie beispielsweise Titantetrabutylat aus mehrwertigen, vorzugsweise zweiwertigen und gegebenenfalls zusätzlich dreiwertigen Alkoholen mit mehrwertigen, vorzugsweise zweiwertigen und gegebenenfalls zusätzlich dreiwertigen Carbonsäuren hergestellt wurden. Anstelle der freien Carbonsäuren können auch die entsprechenden Carbonsäurechloride, Carbonsäureanhydride oder Carbonsäureester niederer Alkohole zur Herstellung dieser Oligoester verwendet werden.

Die mehrwertigen Alkohole können aliphatischer oder cycloaliphatischer, bevorzugt linearer aliphatischer Natur sein. Als Beispiele hierfür seien genannt: Ethylenglykol, Propylenglykol-1,3, Pentandiol-1,5 und vorzugsweise Butandiol-1,4 und Hexandiol-1,6.

Die mehrwertigen Dicarbonsäuren können aliphatischer oder cycloaliphatischer, bevorzugt linearer aliphatischer Natur sein. Als Beispiele hierfür seien genannt: Bernsteinsäure, Korksäure, Azelainsäure, Sebacinsäure und bevorzugt Adipinsäure.

Durch die Wahl des definierten Alkoholüberschusses wird der Gehalt an Hydroxyl-Endgruppen und damit das "mittlere Molgewicht" vorgegeben. Dieses ist durch Bestimmung der "OH-Zahl" ermittelbar.

Die Hartsegmente der erfindungsgemäßen Copolymeren können beispielsweise aus mindestens einem der folgenden Verbindungstypen bestehen:

1. Oligocarbonatsegmente aus Carbonatspendern und Diphenolen. Als Diphenole eignen sich die aus der Polycarbonatchemie bekannten und beispielsweise in DE 2 636 783 aufgelisteten, im Hinblick auf die Kompostierbarkeit bevorzugt die halogenfreien wie beispielsweise Bis(hydroxyphenyl)-alkane, darunter besonders bevorzugt 2,2-Bis-(4-hydroxyphenyl)-propan oder Bis(hydroxyphenyl-)cycloalkane wie beispielsweise 1,1-Bis-(4-hydroxyphenyl)-3,3,5-trimethylcyclohexan. Als Carbonatspender eignen sich ebenfalls die aus der Polycarbonatchemie bekannten, bevorzugt Diphenylcarbonat oder Phosgen.

2. Amidsegmente aus Säureendgruppen der Oligoester durch Umsetzung mit aliphatischen oder cycloaliphatischen mehrfach, bevorzugt zweifach, funktionalisierten Isocyanaten, die eine Molmasse bis 1.000 besitzen können, bevorzugt jedoch Dicyclohexylmethan-4,4'-diisocyanat oder (3-Isocyanatomethyl-3,5,5-trimethyl)cyclohexylisocyanat oder besonders bevorzugt Hexamethylendiisocyanat.

Statt der Isocyanate selbst können auch die betreffenden Isocyanate freisetzende Verbindungen, wie beispielsweise reversibel spaltbare Derivate der Isocyanate (beispielsweise die Urethane mit niedrigen Monoalkoholen), eingesetzt werden.

Die erfindungsgemäße Eigenschaft der Kompostierbarkeit wird wie folgt definiert:

Die zu testenden Polymere werden in einem Flüssigmedium nach ASTM G22 (Zusammensetzung Tab. 1) mit einer Mischung von Mikroorganismen aus Gartenkompost unter Schwenken (220 upm) und Luftzutritt bei 37° C inkubiert. Hierzu wird 1 g des Polymeren in mehreren $cm^2$-großen Stücken in 250 ml Nährsalz-Lösung in 1 l Erlenmeyerkolden mit 2 ml einer Suspension von 10 g Gartenkompost in 100 ml Nährsalzlösung beimpft. Aus der Kompostsuspension werden vorher grobe Teile über ein Feinsieb abgetrennt. Der Trockensubstanz(TS)-Gehalt der Animpfmenge beträgt dann ca. 50 mg. Als Kontrolle zur Messung des abiotischen Gewichtsverlusts der Polymerprobe wird ein Ansatz mit $HgCl_2$ (500 mg/l) versetzt` Weitere Kontrollansätze enthalten Cellulose (4 g/l, Typ DP 500, Fa. Wolff Walsrode) zur Überprüfung des Wachstums mit einem natürlichen Substrat bzw. werden ohne Zusatz einer C-Quelle zur Bestimmung des Hintergrundwachstums und der TS-Abnahme des Inokulums angesetzt.

Tabelle 1

| Zusammensetzung der Nährsalzlösung nach ASTM G22 | |
|---|---|
| $KH_2PO_4$ | 0,7 g |
| $K_2HPO_4$ | 0,7 g |
| $MgSO_4 \cdot 7H_2O$ | 0,7 g |
| $NH_4NO_3$ | 1,0 g |
| NaCl | 0,005 g |
| $FeSO_4 \cdot 7H_2O$ | 0,002 g |
| $ZnSO_4 \cdot 7H_2O$ | 0,002 g |
| $MnSO_4 \cdot H_2O$ | 0,001 g |
| $H_2O$ dest. | 1.000,0 ml |

Zur Bestimmung des TS-Gehaltes der wasserunlöslichen Anteile (Polymer bzw. Polymerreste, Biomasse und Inokulum) wird der gesamte Inhalt eines Kolbens abzentrifugiert, einmal in 0,05 m Phosphatpuffer gewaschen und der unlösliche Rest bei 80° C mindestens 48 h getrocknet. In Parallelkolben wird die Biomasse und das reine Inokulum bestimmt. Durch Subtraktion dieser Meßgrößen kann der Anteil der Polymerreste errechnet werden.

Zur Messung der Biomasse wird ebenfalls der gesamte Inhalt eines Kolbens aufgearbeitet. Hierzu wird eine Modifizierung der Adenosintriphosphat(ATP)-Bestimmung der Firma Lumac-3M verwendet: 10 Minuten nach der Zugabe des Reaktivreagenzes (Lumac) werden 2,5 ml einer 33 %igen Tetrabutylammoniumhydroxydlösung zugegeben. Dies führt zu einer vollständigen ATP-Freisetzung aus der gesamten Biomasse innerhalb von 30 Sekunden. Nach dieser Zeit kann der ATP-Gehalt mit der üblichen Luciferin/Luciferase-Reaktion nach Angaben von Lumac bestimmt werden. Zur Korrelation des ATP-Gehaltes mit der Trockensubstanz wird eine 24 h-Kultur von Kl. planticola mitgemessen, deren ATP/TS-Verhältnis vorher bestimmt wird.

Als gut kompostierbar im erfindungsgemäßen Sinn werden alle Proben bezeichnet, die unter den oben genannten Bedingungen innerhalb von maximal zwei Wochen ein Biomassewachstum auf dem Polymeren von mindestens 30 mg/l ermöglichen.

Nicht kompostierbar im erfindungsgemäßen Sinn sind Proben, die unter den oben genannten Bedingungen innerhalb von maximal 2 Wochen ein Biomassewachstum von höchstens 5 mg/l ermöglichen.

Von der Vielzahl der kompostierbaren erfindungsgemäßen Produkte sind insbesondere Copoly(ester-carbonate) geeignet, die aus 75 Gew.-% bis 85 Gew.-% Estersegmenten aus hydroxyterminierten aliphatischen Estern mit einem mittleren Molekulargewicht ($\overline{M}n$ ermittelt durch die Bestimmung der OH-Zahl) von 1.500 bis 3.000, die vorzugsweise wiederum aus Adipinsäure und Butandiol und/oder Hexandiol herstellbar sind, und zu 15 Gew.-% bis 25 Gew.-% aus Carbonatsegmenten, die aus Diphenolen, wie beispielsweise Bis(hydroxyphenyl)-alkanen, darunter besonders bevorzugt 2,2-Bis-(4-hydroxyphenyl)-propan, oder Bis(hydroxyphenyl)-cycloalkanen wie beispielsweise 1,1-Bis-(4-hydroxyphenyl)-3,3,5-trimethylcyclohexan, und Carbonatspendern herstellbar sind, bestehen.

Die Bestimmung der OH-Zahlen der erfindungsgemäß einsetzbaren hydroxyterminierten aliphatischen Ester erfolgt durch Acylierung mit Acetanhydrid in Pyridin und Rücktitration der entstehenden Essigsäure und des Anhydridüberschusses mit NaOH.

Von der Vielzahl der kompostierbaren erfindungsgemäßen Produkte sind insbesondere Copoly(ester-amide) geeignet, die dadurch gekennzeichnet sind, daß sie aus Estersegmenten aus carboxylterminierten aliphatischen Estern mit einem mittleren Molekulargewicht ($\overline{M}n$ ermittelt durch Bestimmung der Säurezahl) von 600 bis 2.000, welche ihrerseits aus mehrwertigen, bevorzugt zweiwertigen, cycloaliphatischen oder aliphatischen, bevorzugt linearen aliphatischen Carbonsäuren wie beispielsweise bevorzugt Adipinsäure oder Sebacinsäure, und aus mehrwertigen, bevorzugt zweiwertigen, cycloaliphatischen oder aliphatischen, bevorzugt linearen aliphatischen Alkoholen wie beispielsweise bevorzugt Cyclohexandimethanol, Ethylenglykol, Propylenglykol-1,3, Butandiol-1,4, Pentandiol-1,5 und/oder Hexandiol-1,6, herstellbar sind, und aus aliphatischen und/oder cycloaliphatischen Diisocyanaten, bevorzugt Hexamethylendiisocyanat, gegebenenfalls im Gemisch mit mehrwertigen Isocyanaten, beispielsweise in der Schmelze herstellbar sind. Statt der Isocyanate selbst können auch die betreffenden Isocyanate freisetzende Verbindungen, wie beispielsweise reversibel spaltbare Derivate der Isocyanate (beispielsweise die Urethane mit niederen Monoalkoholen), eingesetzt werden.

Statt der Isocyanate selbst können auch die betreffenden Isocyanate freisetzende Verbindungen, wie beispielsweise reversibel spaltbare Derivate der Isocyanate (beispielsweise die Urethane mit niederen Monoalkoholen), eingesetzt werden.

Die erfindungsgemäßen kompostierbaren thermoplastisch verarbeitbaren Kunststoffe können gegebenenfalls mit üblichen Additiven wie beispielsweise Weichmachern, Schlagzähmodifikatoren, Flammschutzmitteln, Hydrophobierungsmitteln, Nukleierungsmitteln und/oder anderen Mitteln ausgerüstet werden, wobei darauf zu achten ist, daß die Kompostierbarkeit nicht beeinträchtigt wird.

Die erfindungsgemäßen kompostierbaren thermoplastisch verarbeitbaren Kunststoffe können, alleine oder mit den genannten Additiven versetzt, mit üblichen Füllstoffen gefüllt werden, wobei auch hierbei darauf zu achten ist, daß die Kompostierbarkeit nicht beeinträchtigt wird.

Die erfindungsgemäßen Copolymeren können beispielsweise zu Folien verarbeitet werden und vorteilhafterweise als kompostierbare Müllbeutel oder Milchfolien eingesetzt werden. Ebenso können sie beispielsweise in üblicher Weise zu Formkörpern spritzgegossen werden, die nach Gebrauch kompostiert werden können.

Die Poly(ester-carbonate) können beispielsweise zu Gießfolien in bekannter Weise verarbeitet werden, die Poly(ester-amide) können beispielsweise zu beliebigen Formkörpern verspritzt werden, die beispeilsweise als Umhüllungen für Grablichte, als Tragegriffe oder als Schlauchverbindungen verwendet werden können.

Die Poly(ester-amide) können je nach Reaktionsführung auch als weiche Schaumkörper hergestellt werden. Diese sind vorteilhaft als kompostierbares Dämmmaterial oder Füllmaterial beispielsweise zu Verpackungszwecken einsetzbar.

Gegenstand der vorliegenden Erfindung sind somit auch Folien, Tiefziehgüter, Formkörper und Schäume aus den erfindungsgemäßen Copolymeren.

## Beispiele

### Beispiel 1

100,3 g eines Oligoesters aus Ethylenglykol und Adipinsäure im Molverhältnis 5 : 6 mit der Säurezahl 123 wird unter Stickstoffatmosphäre auf 200°C erhitzt. Dazu gibt man 19,1 g Hexamethylendiisocyanat so zu, daß das gebildete $CO_2$ entweichen kann. Nach dem Ende der Zugabe läßt man noch 15 Minuten nachrühren und gießt den Ansatz zum Erkalten in eine geeignete Form.

Man erhielt ein Material mit einer relativen Viskosität (0,5 %ig in m-Kresol) von $\eta_{rel} = 1,188$, das sich bei 150°C bis 160°C zu Spritzgußformkörpern verarbeiten ließ`

Das Biomassewachstum betrug nach zwei Wochen unter den im Text beschriebenen Bedingungen 152 mg/l. Der Masseverlust betrug unter den gleichen Bedingungen innerhalb von vier Wochen 84 Gew.-%.

### Beispiel 2

Zu 132,7 g einer auf 200°C unter Stickstoff gerührten Schmelze eines Oligoesters aus Cyclohexan-1,4-dimethanol und Adipinsäure mit einer Säurezahl von 76,1 (bestimmt nach KOH/Methanol-Tritration) werden 15,4 g Hexamethylendiisocyanat so zugetropft, daß das entstehende Kohlendioxid gut entweichen kann. Nach dem Ende der Isocyanatzugabe wird noch 60 Minuten nachgerührt und der Ansatz dann auf eine Schale ausgegossen.

Man erhält das Poly(ester-amid) als feste weiße Masse mit einer Glasübergangstemperatur von 38,6° C (erstes Aufheizen) bzw. 32,8° C (zweites Aufheizen) und einer Kristallitschmelztemperatur von 97° C bzw. 93° C (erstes/zweites Aufheizen; alle Angaben nach DSC) sowie einer Zersetzungstemperatur von über 400° C (TGA). Die relative Viskosität beträgt 1,148 (0,5 %ig in m-Kresol).

### Beispiel 3

In der Schmelze setzt man 70,2 g eines Oligoesters aus Adipinsäure, Trimethylolpropan und Ethylenglykol (Molverhältnis 6:1:3,5) mit einer Säurezahl von 111,8 (bestimmt nach KOH/Methanol-Titration) mit 11,8 g Hexamethylendiisocyanat um. Man erhält einen weichen, farblosen, offenporigen Schaum.

### Beispiel 4

Unter Stickstoff werden 157,5 g eines Oligoesters aus Hexandiol-1,6 und Adipinsäure mit einer Säurezahl von 85,5 (bestimmt nach KOH/Methanol-Titration) und 38,8 g Hexamethylen-1,6-bis(tert-butylurethan), das durch Umsetzung von Hexamethylendiisocyanat mit tert.-Butanol erhältlich ist, so erhitzt, daß das entstehende Kohlendioxid und tert.-Butanol gut entweichen können. Nach dem Erreichen vn 200° C wird noch 60 Minuten nachgerührt und der Ansatz dann auf eine Schale ausgegossen.

Man erhält das Poly(ester-amid) als feste Masse mit einer Glasübergangstemperatur von 20° C und einer Kristallitschmelztemperatur von 135° C (Angaben nach DSC) sowie einer Zersetzungstemperatur von über 400° C (TGA in Luft).

Beispiel 5a

Zu 3,6 kg eines Oligoesters aus Adipinsäure und Hexandiol mit einer OH-Zahl von 54 (bestimmt nach der Acetanhydridmethode) und 15,3 kg Chlorbenzol gibt man 0,9 kg Bisphenol-A-Polycarbonat mit $\eta_{rel}$ = 1,57 (0,5 %ig in Dichlormethan) und 0,0018 kg Dinatriumbisphenolat-A, bringt das Gemisch unter Rühren 8 h zum Rückfluß und läßt abkühlen.

Beispiel 5b

Zu 13,8 kg der Lösung aus Beispiel 5a gibt man 1,6 kg 45 %ige Natronlauge, 17,1 kg Wasser, 37,0 kg Dichlormethan und leitet unter Rühren 0,522 kg Phosgen in das Gemisch. Nach dem Ende der Phosgeneinleitung gibt man 5,4 ml N-Ethylpiperidin zu und rührt eine Stunde nach. Gegebenenfalls muß die Lösung beim Nachrühren mit bis zu 9 l Chlorbenzol und bis zu 20 l Dichlormethan verdünnt werden. Nach dem Nachrühren wird die Lösung angesäuert und mit Wasser elektrolytfrei gewaschen. Getrocknet wird auf einem Einwellenextruder bei 230° C und 50 Upm.

Man erhielt ein farbloses Material mit $\eta_{rel}$ = 1,89 (0,5 %ig in Dichlormethan). Das Biomassewachstum betrug nach zwei Wochen unter den im Text beschriebenen Bedingungen 274 mg/l. Der Masseverlust betrug unter den gleichen Bedingungen innerhalb von vier Wochen 37 Gew.-%.

Beispiel 6a

Zu 120 g eines Oligoesters aus Adipinsäure und Hexandiol mit einer OH-Zahl von 54 (bestimmt nach der Acetanhydridmethode) und 425 g Chlorbenzol gibt man 30 g eines Polycarbonats aus 1,1-Bis(4-hydroxyphenyl)-3,3,5-trimethylcyclohexan mit $\eta_{rel}$ = 1,29 (0,5 %ig in Dichlormethan) und 0,125 g Dinatriumbisphenolat-A, bringt das Gemisch unter Rühren 8 h zum Rückfluß und entfernt das Lösungsmittel.

Beispiel 6b

Zu 50.0 g des Produktes aus Beispiel 6a gibt man 500 ml Dichlormethan und die Lösung vn 8,0 g Natriumhydroxyd in 200 ml Wasser und leitet unter Rühren 5,8 g Phosgen in das Gemisch. Nach dem Ende der Phosgeneinleitung gibt man 0,06 ml N-Ethylpiperidin zu und rührt eine Stunde nach.

Nach dem Nachrühren wird die Lösung angesäuert, mit Wasser neutral gewaschen, getrocknet und eingedampft. Man erhielt ein farbloses Material mit $\eta_{rel}$ = 1,91 (0,5 % in Dichlormethan).

**Patentansprüche**

1. Kompostierbare, thermoplastisch verarbeitbare Copolymere aus teilkristallinen Weichsegmenten aus aliphatischen Estern mit einem Schmelzbereich zwischen 30°C und 200°C sowie amorphen Hartsegmenten, wobei die Weichsegmente einen Anteil von 70 Gew.-% bis 95 Gew.-%, bezogen auf das Copolymer, haben, die erfindungsgemäßen Copolymere ein mittleres Molekulargewicht (Mw ermittelt nach Gelchromatographie in m-Kresol gegen Standard Polystyrol) von 15.000 bis 1.000.000 aufweisen und wobei 1 g erfindungsgemäßes Copolymer in 250 ml ASTM-G22-Nährsalzlösung bei einem pH-Wert von 6,8, angeimpft mit 2 ml einer Suspension von 10 g Gartenkompost in 100 ml Nährsalzlösung, bei Schwenken mit 220 Upm bei 37°C unter Luftzutritt innerhalb von höchstens zwei Wochen das Wachstum von mindestens 30 mg/l Biomasse hervorruft.

2. Copolymere gemäß Anspruch 1, dadurch gekennzeichnet, daß die teilkristallinen Weichsegmente einen Schmelzbereich von 40°C bis 120°C und/oder die erfindungsgemäßen Copolymere ein mittleres Molekulargewicht ($\overline{M}$w) von 25.000 bis 400.000 haben.

3. Copolymere gemäß Anspruch 1, dadurch gekennzeichnet, daß die Weichsegmente einen Anteil von 75 Gew.-% bis 85 Gew.-% haben.

4. Folien, Tiefziehgüter, Formkörper und Schäume aus den Materialien der Ansprüche 1 bis 3.

## Claims

1. Compostible, thermoplastically workable copolymers consisting of partially crystalline soft segments formed from aliphatic esters with a melting-range between 30°C and 200°C and also consisting of amorphous hard segments, wherein the soft segments make up a proportion from 70 wt-% to 95 wt-% relative to the copolymer, the copolymers according to the invention have an average molecular weight ($\overline{M}$w, determined by gel chromatography in m-cresol using polystyrene as standard) of 15,000 to 1,000,000, and wherein 1 g of copolymer according to the invention in 250 ml ASTM-G22 nutrient-salt solution with a pH value of 6.8, inoculated with 2 ml of a suspension of 10 g of garden compost in 100 ml nutrient-salt solution, subject to swirling at 220 rpm at 37°C with admission of air, brings about within at most two weeks the growth of at least 30 mg/l of biomass.

2. Copolymers according to Claim 1, characterised in that the partially crystalline soft segments have a melting-range from 40°C to 120°C and/or the copolymers according to the invention have an average molecular weight Mw of 25,000 to 400,000.

3. Copolymers according to Claim 1, characterised in that the soft segments make up a proportion from 75 wt-% to 85 wt%.

4. Films, thermoforming goods, moulded bodies and foams produced from the materials of Claims 1 to 3.

## Revendications

1. Copolymères compostables, aptes au travail thermoplastique, consistant en segments mous partiellement cristallins d'esters aliphatiques fondant dans l'intervalle de 30 à 200°C et segments durs amorphes, les segments mous représentant de 70 à 95 % du poids du copolymère, les copolymères selon l'invention ayant un poids moléculaire moyen ($\overline{M}$w déterminé par chromatographie sur gel dans le m-crésol avec un étalon de polystyrène) de 15 000 à 1 000 000, et 1 g d'un copolymère selon l'invention dans 250 ml de solution de sels nutritifs ASTM-G22, à pH 6,8, ensemencés par 2 ml d'une suspension de 10 g de compost de jardin dans 6 ml de la solution de sels nutritifs, soumis à culture sous agitation à 220 tr/min à 37°C avec apport d'air, provoque en deux semaines au maximum la croissance d'au moins 30 mg/l de biomasse.

2. Copolymères selon revendication 1, caractérisés en ce que les segments mous partiellement cristallins fondent dans l'intervalle de 40 à 120°C et/ou les copolymères selon l'invention ont un poids moléculaire moyen ($\overline{M}$w) de 25 000 à 400 000.

3. Copolymères selon revendication 1, caractérisés en ce que les segments mous sont présents en proportion de 75 à 85 % en poids.

4. Feuilles, articles emboutis, objets moulés et mousses consistant en les matières des revendications 1 à 3.